# EUROPÄISCHE PATENTSCHRIFT

(11) **EP 3 469 141 B1**
(45) Veröffentlichungstag und Bekanntmachung des Hinweises auf die Patenterteilung: **01.04.2020**
(21) Anmeldenummer: 17722375.7
(22) Anmeldetag: 10.05.2017
(51) Int. Cl.: E01B 29/42, B60F 1/04

(54) **FAHRZEUG UND VERFAHREN ZUM TRANSPORT EINER MOBILEN SCHWEISSVORRICHTUNG**
VEHICLE AND METHOD FOR TRANSPORTING A MOBILE WELDING APPARATUS
VÉHICULE ET PROCÉDÉ DE TRANSPORT D'UN GABARIT DE SOUDAGE MOBILE

(30) Priorität: 08.06.2016 AT 2792016
(43) Veröffentlichungstag der Anmeldung: 17.04.2019
(73) Patentinhaber: Plasser & Theurer, Export von Bahnbaumaschinen, Gesellschaft m.b.H., 1010 Wien (AT)
(72) Erfinder: WÖRGÖTTER Herbert, 4209 Engerwitzdorf (AT)
(86) Internationale Anmeldenummer: PCT/EP2017/000570
(87) Internationale Veröffentlichungsnummer: WO 2017/211440

(56) Entgegenhaltungen:
- RU-C2- 2 272 859
- US-A- 6 163 003
- US-A1- 2002 170 884

## Beschreibung

### Gebiet der Technik

Die Erfindung betrifft ein Zweiwegefahrzeug mit mobiler Schweißvorrichtung, welches sowohl auf einem Gleis als auch auf einer Straße verfahrbar ausgeführt ist, mit einem auf Straßenfahrwerken oder Schienenfahrwerken abgestützten Maschinenrahmen und einem mit diesem verbundenen und absenkbaren Schweißaggregat. Zudem betrifft die Erfindung ein Verfahren zum Transport des Schweißaggregates auf einer Straße mittels eines solchen Zweiwegefahrzeuges.

### Stand der Technik

Verschiedene Zweiwegefahrzeuge mit mobiler Schweißvorrichtung sind dafür vorgesehen, ein sich im Fahrzeug befindliches Schweißaggregat auf die Baustelle zu transportieren um dort eine Schiene zu verschweißen. Konkret wird das Schweißaggregat aus dem Heckbereich des Fahrzeuges über einen Kranausleger abgesenkt und auf dem Gleis positioniert und ausgerichtet. Anschließend wird das Aggregat in umgekehrter Reihenfolge wieder auf dem Fahrzeug verladen.

Ein solches Zweiwegfahrzeug ist beispielsweise aus der US 6,163,003 A bekannt. Ein Transportanhänger für eine mobile Schweißeinrichtung ist aus der RU 2 272 859 C2 bekannt.

Durch die im Straßenverkehr gesetzlich begrenzte Achslast für Kraftfahrzeuge müssen die Fahrzeugaufbauten mit dementsprechend kleinen und leichten Schweißvorrichtungen ausgestattet werden um diesen Grenzwert nicht zu überschreiten. Dadurch gibt es Einbußen in der Leistungsfähigkeit des Aggregates und letztendlich in der Qualität der Schweißung.

### Zusammenfassung der Erfindung

Der Erfindung liegt die Aufgabe zugrunde, für ein Zweiwegefahrzeug der eingangs genannten Art eine Verbesserung gegenüber dem Stand der Technik anzugeben. Eine weitere Aufgabe besteht darin, ein Verfahren zum Transport eines Schweißaggregats mittels eines verbesserten Zweiwegefahrzeuges darzulegen.

Erfindungsgemäß wird diese Aufgabe gelöst durch ein Zweiwegefahrzeug gemäß Anspruch 1 und ein Verfahren gemäß Anspruch 5. Abhängige Ansprüche betreffen vorteilhafte Ausgestaltungen der Erfindung.

Die Erfindung sieht vor, dass das Schweißaggregat für den Transport auf einer Straße auf einem an ein Zugfahrzeug angekoppelten Transportanhänger positioniert ist und absenkbar über eine Drehpfanne mit schwimmender Ankopplung und einer permanenten flexiblen Verbindung untrennbar mit dem Zugfahrzeug verbunden ist. Somit muss das Schweißaggregat nicht erst an einem Zugfahrzeug angekoppelt werden. Der wesentliche Vorteil liegt hier darin, dass die gesetzlich vorgeschriebenen Achslasten des Zweiwegefahrzeuges nicht überschritten werden und somit mit schwereren und leistungsfähigeren Schweißgeräten ausgestattet werden kann. Mit dem separaten Transportanhänger kann die Bauform des Schweißaggregats sehr kompakt gestaltet werden.

Vorteilhaft ist auch, dass die Drehpfanne in einer Fahrzeuglängsrichtung verschiebbar ausgeführt ist. Hierdurch kann das Schweißaggregat flexibel auf dem Maschinenrahmen positioniert werden.

Vorzugsweise ist das Schweißaggregat als Abbrennstupfschweißgerät ausgeführt. Mit dieser Ausführungsform des Schweißaggregats kann eine qualitativ hochwertige Schweißung der Schienen erfolgen.

Bevor das Fahrzeug auf einem Gleis verfahrbar positioniert ist, wird der Transportanhänger abgekoppelt, da für Schienenfahrzeuge ein höherer Grenzwert der Achslasten vorgesehen ist. Somit kann die Schweißvorrichtung während eines Arbeitseinsatzes auf dem Gleis frei abgesenkt werden.

Ein weiteres vorteilhaftes Detail der Vorrichtung ist, dass der Antrieb für eine Hebevorrichtung des Schweißaggregates hydraulisch ausgeführt ist. Dadurch lassen sich schnelle Bewegungen beim Verladen des Schweißaggregats sowie langsame Präzisionsbewegungen beim Ausrichten und Positionieren auf dem Gleis verwirklichen.

Weitere Vorteile der Erfindung ergeben sich der Zeichnungsbeschreibung.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:

- Fig. 1: Zweiwegefahrzeug in Seitenansicht auf einer Straße
- Fig. 2: Zweiwegefahrzeug in Seitenansicht auf einem Gleis

### Beschreibung der Ausführungsformen

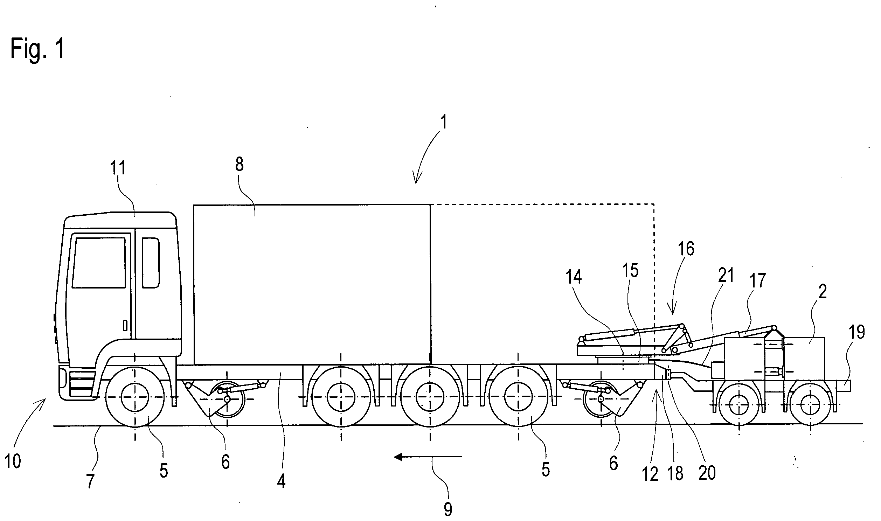

Ein in Fig. 1 dargestelltes Zweiwegefahrzeug mit mobiler Schweißvorrichtung 1 umfasst ein Zugfahrzeug 8 mit unterhalb eines Maschinenrahmens 4 angeordneten Straßenfahrwerken 5 und Schienenfahrwerken 6 zum Transport eines Schweißaggregates 2. Fig.1 zeigt eine Transportstellung auf einer Straße 7. Auf dem Maschinenrahmen 4 des Zugahrzeuges 8 sitzt am in Fahrtrichtung 9 gesehenen vorderen Ende 10 eine Fahrerkabine 11, am entgegengesetzten Ende 12 befindet sich eine in Fahrzeuglängsrichtung 13 verschiebbare und um eine erste vertikale Drehachse 14 bewegliche Drehpfanne 15 samt schwimmender Ankopplung 16 und Hebevorrichtung 17 zum Heben und Absenken des Schweißaggregates 2. Am in Fahrtrichtung 9 gesehenen entgegengesetzten Ende 12 des Maschinenrahmens 4 ist eine Anhängerkupplung 18 angebracht, an welcher ein Transportanhänger 19 samt darauf abgesenktem Schweißaggregat 2 angekoppelt und um eine zweite vertikale Drehachse 20 beweglich ausgeführt ist. Wie in Fig. 1 ersichtlich besteht eine permanente flexible Verbindung 21 aus hydraulischen und elektrischen Leitungen zwischen dem Zugfahrzeug 8 und dem Schweißaggregat 2. Da sich die Drehpfanne 15 und die Anhängerkupplung 18 um zwei verschiedene Drehachsen 14,20 bewegen, muss dies durch die schwimmende Ankopplung 16 kinematisch ausgeglichen werden.

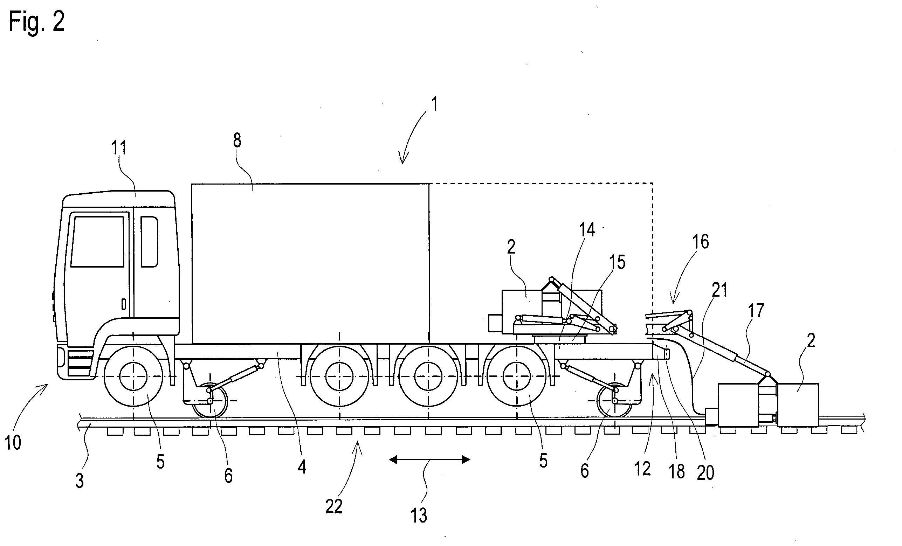

In Fig. 2 wird ein Transport auf einem Gleis 22 sowie eine Arbeitsstellung dargestellt. In der Transportstellung auf dem Gleis 22 ist die Drehpfanne 15 samt schwimmender Ankopplung 16, Hebevorrichtung 17 und dem angehobenen Schweißaggregat 2 in Fahrtrichtung 9 verschoben. In der Arbeitsstellung ist das Schweißaggregat 2 auf einem Gleis 22 abgesenkt und umfasst eine Schiene 3.

## Patentansprüche

1. Zweiwegefahrzeug mit mobiler Schweißvorrichtung (1) zum Verschweißen einer Schiene (3), welches sowohl auf einem Gleis (22), als auch auf einer Straße (7) verfahrbar ausgeführt ist, mit einem einen Machinenrahmen (4) umfassenden Zugfahrzeug (8) sowie mit einem mit dem Maschinenrahmen (4) verbundenen und absenkbaren Schweißaggregat (2), wobei das Schweißaggregat (2) über eine Drehpfanne (15) mit schwimmender Ankoppelung (16) und eine permanente flexible Verbindung (21) untrennbar mit dem Zugfahrzeug (8) absenkbar verbunden ist, **dadurch gekennzeichnet, dass** das Zweiwegefahrzeug einen an das Zugfahrzeug (8) angekoppelbaren und auf der Straße (7) verfahrbahren Transportanhänger (19) aufweist und das abgesenkte Schweißaggregat (2) für einen Transport auf der Straße (7) auf dem an das Zugfahrzeug (8) angekoppelten Transportanhänger (19) positioniert werden kann.

2. Zweiwegefahrzeug mit mobiler Schweißvorrichtung (1) nach Anspruch 1, **dadurch gekennzeichnet, dass** die Drehpfanne (15) in einer Fahrzeuglängsrichtung (13) verschiebbar ausgeführt ist.

3. Zweiwegefahrzeug mit mobiler Schweißvorrichtung (1) nach einem der Ansprüche 1 bis 2, **dadurch gekennzeichnet, dass** das Schweißaggregat (2) als Abbrennstumpfschweißgerät ausgeführt ist.

4. Zweiwegefahrzeug mit mobiler Schweißvorrichtung (1) nach einem der Ansprüche 1 bis 3, **dadurch gekennzeichnet, dass** das ein Antrieb für eine Hebeeinrichtung (17) hydraulisch ausgeführt ist.

5. Verfahren zum Transport eines Schweißaggregates (2) auf einer Straße (7) mittels eines Zweiwegefahrzeuges (1) nach einem der Ansprüche 1 bis 4, **dadurch gekennzeichnet, dass** für den Transport auf einer Straße (7) der Transportanhänger (19) an das Zugfahrzeug (8) angekoppelt wird und dass das Schweißaggregat (2) auf den Transportanhänger (19) abgesenkt wird und dabei über die Drehpfanne (15) mit schwimmender Ankopplung (16) und die permanente flexible Verbindung (21) untrennbar mit dem Zugfahrzeug (8) verbunden bleibt.

6. Verfahren nach Anspruch 5, **dadurch gekennzeichnet, dass** die Drehpfanne (15) mit schwimmender Ankopplung (16) in Fahrzeuglängsrichtung (13) verschoben wird.

## Claims

1. A two-way vehicle with mobile welding device (1) for welding a rail (3), the vehicle being designed to be mobile on a track (22) as well as on a road (7), with a tractive vehicle 8 including a machine frame 4 and a welding unit (2) connected to a machine frame (4) and designed to be lowered, wherein the welding unit (2) is connected non-separably to the tractive vehicle (8) via the pivot bearing (15) with floating coupling (16) and the permanent flexible connection (21), **characterized in that** the two-way vehicle has a transport trailer (19) which is mobile on a road (7) and can be coupled to the tractive vehicle (8) and that the lowered welding unit (2) can be positioned on the transport trailer (19) coupled to the tractive vehicle (8) for a transport on the road (7).

2. A two-way vehicle with mobile welding device (1) according to claim 1, **characterized in that** the pivot bearing (15) is designed to be displaceable in a longitudinal direction (13) of the vehicle.

3. A two-way vehicle with mobile welding device (1) according to one of claims 1 to 2, **characterized in that** the welding unit (2) is designed as a flash-butt welding unit.

4. A two-way vehicle with mobile welding device (1) according to one of claims 1 to 3, **characterized in that** a drive for a lifting device (17) of the welding unit is of hydraulic design.

5. A method for transporting a welding unit (2) on a road (7) by means of a two-way vehicle (1) according to one of claims 1 to 4, **characterized in that** the transport trailer (19) is coupled to the tractive vehicle (8) for the transport on a road (7), and that the welding unit (2) is lowered on the transport trailer (19) and, during this, remains non-separably connected to the tractive vehicle (8) via the pivot bearing (15) with floating coupling (16) and the permanent flexible connection (21).

6. A method according to claim 5, **characterized in that** the pivot bearing (15) with floating coupling (16) is displaced in the longitudinal direction (13) of the vehicle.

## Revendications

1. Véhicule mixte rail-route avec un dispositif de soudage mobile (1) pour le soudage d'un rail (3) qui est réalisé de manière à pouvoir être déplacé aussi bien sur une voie ferrée (22) que sur une route (7), avec un véhicule tracteur (8) comprenant un châssis de machine (4) ainsi qu'avec un module de soudage (2) connecté au châssis de machine (4) et pouvant être abaissé, dans lequel le module de soudage (2) est connecté de manière inséparable au véhicule tracteur (8) de manière à pouvoir être abaissé par le biais d'un cercle de rotation (15) avec accrochage flottant (16) et d'une connexion flexible permanente (21), **caractérisé en ce que** le véhicule mixte rail-route présente une remorque de transport (19) pouvant être accrochée au véhicule tracteur (8) et pouvant être déplacée sur la route (7) et le module de soudage abaissé (2) peut être positionné sur la remorque de transport (19) accrochée au véhicule tracteur (8) pour un transport sur la route (7).

2. Véhicule mixte rail-route avec un dispositif de soudage mobile (1) selon la revendication 1, **caractérisé en ce que** le cercle de rotation (15) est réalisé de manière à pouvoir être coulissé dans une direction longitudinale de véhicule (13).

3. Véhicule mixte rail-route avec un dispositif de soudage mobile (1) selon une des revendications 1 à 2, **caractérisé en ce que** le module de soudage (2) est réalisé en tant qu'appareil de soudage par étincelage.

4. Véhicule mixte rail-route avec un dispositif de soudage mobile (1) selon une des revendications 1 à 3, **caractérisé en ce qu'**un entraînement pour un dispositif de levage (17) est réalisé de manière hydraulique.

5. Procédé pour le transport d'un module de soudage (2) sur une route (7) au moyen d'un véhicule mixte rail-route (1) selon une des revendications 1 à 4, **caractérisé en ce que** la remorque de transport (19) est accrochée au véhicule tracteur (8) pour le transport sur une route (7) et que le module de soudage (2) est abaissé sur la remorque de transport (19) et reste ce faisant connecté de manière inséparable au véhicule tracteur (8) par le biais du cercle de rotation (15) avec accrochage flottant (16) et de la connexion flexible permanente (21).

6. Procédé selon la revendication 5, **caractérisé en ce que** le cercle de rotation (15) avec accrochage flottant (16) est coulissé dans la direction longitudinale de véhicule (13).
